**Europäisches Patentamt**

**European Patent Office**

**Office européen des brevets**

(19)

(11) Veröffentlichungsnummer: **0 178 324 B1**

(12) **EUROPÄISCHE PATENTSCHRIFT**
**veröffentlicht nach Art. 158 Abs. 3**
**EPÜ**

(45) Veröffentlichungstag der Patentschrift: **28.08.91**

(51) Int. Cl.5: **B65G 23/30**, B65G 47/28,
B65B 57/04

(21) Anmeldenummer: **85902501.7**

(22) Anmeldetag: **30.04.85**

(86) Internationale Anmeldenummer:
**PCT/EP85/00191**

(87) Internationale Veröffentlichungsnummer:
**WO 85/05089 (21.11.85 85/25)**

(54) **VORRICHTUNG ZUR SYNCHRONISATIONSSTEUERUNG VON IN EINER FÖRDERKETTE HINTEREINANDERGESCHALTETEN PACKMASCHINEN, INSBES. DER SÜSSWARENINDUSTRIE.**

(30) Priorität: **30.04.84 DE 3416012**

(43) Veröffentlichungstag der Anmeldung:
**23.04.86 Patentblatt 86/17**

(45) Bekanntmachung des Hinweises auf die
Patenterteilung:
**28.08.91 Patentblatt 91/35**

(84) Benannte Vertragsstaaten:
**CH GB IT LI NL**

(56) Entgegenhaltungen:
**FR-A- 2 382 387**
**FR-A- 2 473 467**

(73) Patentinhaber: **Otto Hänsel GmbH**
**Lister Damm 19**
**W-3000 Hannover(DE)**

(72) Erfinder: **HOGENKAMP, Wilhelm**
**Yorckstrasse 2**
**W-3000 Hannover(DE)**

(74) Vertreter: **Patentanwälte Dipl.-Ing. Rudolf Bi-**
**brach Dipl.-Ing. Elmar Rehberg**
**Postfach 1453 Pütterweg 6**
**W-3400 Göttingen(DE)**

## Beschreibung

Die Erfindung bezieht sich auf eine Fördervorrichtung zum Verbinden einer ersten und einer von dieser mit Packgut belieferten zweiten Packmaschine, wobei der Antrieb der ersten Packmaschine einen ihr zugeordneten Auslaufförderer und der Antrieb der zweiten Packmaschine einen dieser zugeordneten Einlaufförderer jeweils synchron steuern, mit einer den Auslaufförderer und den Einlaufförderer verbindenden, einen Speicher bildenden Förderstrecke mit angetriebenen Mitnehmern zum Fördern des Packguts, wobei der gegenseitige Abstand der Mitnehmer im Bereich der Förderstrecke veränderlich ist, und einer elektronische Steuereinrichtung Abstimmung der Arbeitsgeschwindigkeit der zweiten Packmaschine abhängig von der ersten Packmaschine. Solche Packmaschinen finden insbesondere im Bereich der Süßwarenindustrie Anwendung, wenn es darum geht, Artikel in einer ersten Packmaschine einzeln zu verpacken und diese einzeln verpackten Artikel der nachfolgenden zweiten Packmaschine zuzuführen, um aus den einzelnen verpackten Artikeln eine Sammelpackung herzustellen. Dabei geht es insbesondere um die Verpackung von solchen Artikeln, die zu empfindlich sind, um gegenüber einem ortsfesten Anschlag und in Anlage aneinander aufgestaut zu werden und die den dabei entstehenden Staudruck insoweit nicht aushalten.

Eine Fördervorrichtung der eingangs beschriebenen Art ist aus der DE-PS 22 53 632 bekannt. Die erste Packmaschine besitzt an ihrem Auslauf einen Auslaufförderer in Form einer mit Mitnehmern besetzten Laschenkette, die ihren Antrieb von der ersten Packmaschine ableitet. Am Eingang bzw. Einlauf der zweiten Packmaschine ist ein Einlaufförderer, ebenfalls in Form einer Laschenkette, vorgesehen, der seinen Antrieb von dem Antrieb der zweiten Packmaschine ableitet, wobei der Einlaufförderer synchron von dem Antrieb der zweiten Packmaschine angetrieben wird. Zwischen dem Auslaufförderer der ersten Packmaschine und dem Einlaufförderer der zweiten Packmaschine ist eine Förderstrecke in Form von Schlepp- und Schleifbändern vorgesehen, die über Reibung Transportbecher mitnimmt und insoweit mit Mitnehmern versehen ist. Die Transportbecher werden von dem Auslaufförderer herangeführt und von dem Einlaufförderer abgeführt. Der gegenseitige Abstand dieser Mitnehmer ist im Bereich der Förderstrecke veränderlich, weil die die Packstücke enthaltenden Behälter auf dem Schlepp- und Schleifband bei einer Stauung auf dem Band gleiten können. Die Förderstrecke mit den Behältern bildet einen Speicher, dessen Füllung von einer Lichtsteueranlage überwacht wird. Bei einem größeren Stau auf der Förderstrecke schaltet die Lichtsteueranlage die erste Packmaschine ab. Ergibt sich beim Rücklauf der entleerten Behälter ein größerer Stau, so wird die zweite Packmaschine über eine im Rücklauf angeordnete Lichtsteueranlage abgeschaltet. Insoweit ist damit eine Einrichtung zur Abstimmung der Arbeitsgeschwindigkeit der zweiten Packmaschine abhängig von der ersten Packmaschine gebildet. Ansonsten sind die beiden Packmaschinen durch die Förderstrecke lediglich elastisch miteinander verbunden, darüberhinaus jedoch vollständig voneinander entkoppelt. Weder Geschwindigkeitsänderungen im Bereich der Förderstrecke noch Änderungen in der Geschwindigkeit der einen Packmaschine wirken sich auf die Arbeitsgeschwindigkeit der anderen Packmaschine unmittelbar aus.Daran ist nachteilig, daß die Arbeitsgeschwindigkeiten der beiden Packmaschinen entweder in anderer Weise aneinander angepaßt werden müssen oder aber beide Packmaschine nur solange gleichzeitig betrieben werden können, wie dies der Aufbau eines Staus oder der Abbau eines Staus in der Förderstrecke zuläßt. Darüberhinaus ist es schwer, insbesondere schnellaufende Packmaschinen also solche von hoher Leistung, jeweils stillzusetzen, wenn eine Lichtsteueranlage dies veranlaßt. Es entstehen hierdurch erhebliche Arbeitsunterbrechungen und Stillstandszeiten, die für schnellaufende Packmaschinen nicht akzeptabel sind.

Der Erfindung liegt die Aufgabe zugrunde, eine Fördervorrichtung der eingangs beschriebenen Art in Verbindung mit zwei Packmaschinen so weiterzubilden,daß die beiden Packmaschinen mit aneinander angepaßten Arbeitsgeschwindigkeiten über die dazwischengeschaltete, einen Speicher bildende Förderstrecke kontinuierlich betrieben werden können, und zwar auch dann, wenn in der ersten Packmaschine Fehlbesetzungen oder fehlerhafte Verpackungen, die aussortiert werden müssen, auftreten. Dabei soll ein Stillsetzen der einen oder anderen Packmaschine möglichst vermieden werden.

Erfindungsgemäß wird dies dadurch erreicht, daß die Mitnehmer im Bereich der Förderstrecke auf einer Förderkette angeordnet sind, die als Kettenspeicher ausgebildet und über ein am Anfang der Förderstrecke angeordnetes Kettenrad von der ersten Packmaschine und über ein am Ende der Förderstrecke angeordnetes Kettenrad von der zweiten Packmaschine angetrieben ist, daß die Kettenräder je mit einem Drehimpulsgeber versehen sind und daß bei einer Geschwindigkeitsregulierung des Antriebs des einen Kettenrads die Arbeitsgeschwindigkeit der zweiten Packmaschine und damit des anderen Kettenrads durch die als Synchronisationseinrichtung ausgebildete elektronische Steuereinrichtung veränderbar ist. Wesentliches Element der Förderstrecke ist ein Kettenspeicher, also eine längenveränderliche Förderkette, die mit einer vorgegebenen Anzahl Packstücke in einem mittleren Füllungsgrad beschickbar ist und die durch Verlängerung des Stücks Förderkette, das sich zwischen den beiden Kettenrädern befindet, vergleichsweise mehr Packstücke bzw. umgekehrt weniger Packstücke über eine entsprechende Speicherzeit aufnehmen kann. Damit ist die Voraussetzung dafür gegeben, nicht eine Befüllung des Speichers bis zu seiner maximalen Aufnahmekapazität abzuwarten und durch eine Lichtschranke die eine oder andere Packmaschine abrupt stillzusetzen, was insbesondere bei schnellaufenden Packmaschinen und unter Rücksicht auf empfindliche Packgutstücke häufig gar nicht möglich ist, sondern bei auftretenden Differenzen zu dem mittleren vorgesehenen Füllungsgrad des Speichers lediglich eine Anpassung der Arbeitsgeschwindigkeit der zweiten Packmaschine zu erzielen, freilich alles bei kontinuierlich weiterlaufendem Verpackungsvorgang. Erhöhungen bzw. Erniedrigungen der Arbeitsgeschwindigkeit der zweiten Packmaschine relativ zur Arbeitsgeschwindigkeit der ersten Packmaschine lassen sich vorteilhaft auch bei schnellaufenden Packmaschinen ausregeln. Oft ist es auch noch so, daß die beiden Packmaschinen mit unterschiedlichen Arbeitsgeschwindigkeiten bezogen auf das einzelne Packgutstück betrieben werden müssen, weil die erste Packmaschine z. B. ein einzelnes Packgutstück verpackt und die zweite Packmaschine Packgutstücke in Form einer Sammelpackung aus einer festgelegten Anzahl der Packgutstücke der ersten Packmaschine herstellt. Zur Anpassung dieser Arbeitsgeschwindigkeiten dienen Drehimpulsgeber, die Impulse entsprechend dem tatsächlichen Antrieb der am Anfang und am Ende der Förderstrecke angeordneten Kettenräder abgeben. Diese Impulse werden von der elektronischen Steuereinrichtung insoweit verarbeitet, in Vergleich zueinander gesetzt und sind letztlich bestimmend für die Veränderung der Arbeitsgeschwindigkeit der zweiten Packmaschine. Dabei ergibt sich vorteilhaft weiterhin die Möglichkeit, die Arbeitsgeschwindigkeit der ersten Packmaschine nicht nur bei ordnungsgemäßer Arbeitsweise als bestimmend für die Arbeitsgeschwindigkeit der zweiten Packmaschine heranzuziehen, sondern auch die insoweit durch Fehlstellen oder Fehlverpackungen verminderte Arbeitsgeschwindigkeit des Kettenrads am Anfang der Förderstrecke.

Zur Geschwindigkeitsregulierung des Antriebs des einen Kettenrads kann in dem Antriebsstrang zu diesem Kettenrad eine Eintourenkupplung angeordnet sein. Diese Eintourenkupplung unterbricht den Antrieb des Kettenrads am Anfang der Förderstrecke, und zwar entsprechend dem Auftreten des Fehlers am Ende der ersten Packmaschine, obwohl die erste Packmaschine mit insoweit unveränderter Arbeitsgeschwindigkeit weiterläuft. Das mit Fehlern behaftete Packgutstück kann insoweit an dieser Stelle ausgesondert werden und das nächstfolgende, ordnungsgemäß verpackte Packgutstück nimmt auf dem Förderer den Platz des ausgesonderten Packgutstücks ein, so daß sich innerhalb dieser Zeiteinheit die im Speicher befindlichen Packgutstücke in ihrer Anzahl verringert haben, so daß die Arbeitsgeschwindigkeit der zweiten Packmaschine geringfügig gesenkt wird, bis sich im Speicher bzw. der Förderstrecke die vorgesehene mittlere Befüllung hinsichtlich der Anzahl wieder eingestellt hat.

Es kann eine die ordnungsgemäße Beschickung der Förderkette mit Packgut überwachende Kontrolleinrichtung vorgesehen sein, die den Antrieb des Kettenrads steuert. Auf diese Art und Weise wird das Kettenrad am Anfang der Förderstrecke nur dann angetrieben, wenn auch ein ordnungsgemäß verpacktes Packstückgut von der Förderstrecke übernommen wird. Anders gesagt wird das Kettenrad am Anfang der Förderstrecke nur dann um einen entsprechenden Weg weiterbewegt, wenn aus dem Auslaufförderer der ersten Packmaschine ein ordnungsgemäß verpackter Artikel ausläuft bzw. in die Förderstrecke übernommen wird.

Die als Kettenspeicher ausgebildete Förderkette kann zwischen den Mitnehmern Durchhänge bilden und durch eine verschiebbare Führungsbahn geführt sein. Auf diese Art und Weise läßt sich die Förderkette einfach realisieren und es tritt bei Anwendung der verschiebbaren Führungsbahn der zusätzliche Vorteil ein, daß auch bei Unter- bzw. Überfüllung des Speichers die Packgutstücke oder die gruppierten Packgutstücke mit gleichmäßigem Abstand voneinander geführt werden, so daß sie jedenfalls nicht aneinander anschlagen können.

Eine Ausführungsform der Fördervorrichtung ist in den Zeichnungen dargestellt und wird im Folgenden beschrieben. Es zeigt:

Figur 1 eine schematische Darstellung einer aus zwei hintereinandergeschalteten Packmaschinen gebildeten Verpackungsstraße und

Figur 2 eine Einzeldarstellung der Ausbildung der Förderkette in vergrößertem Maßstab.

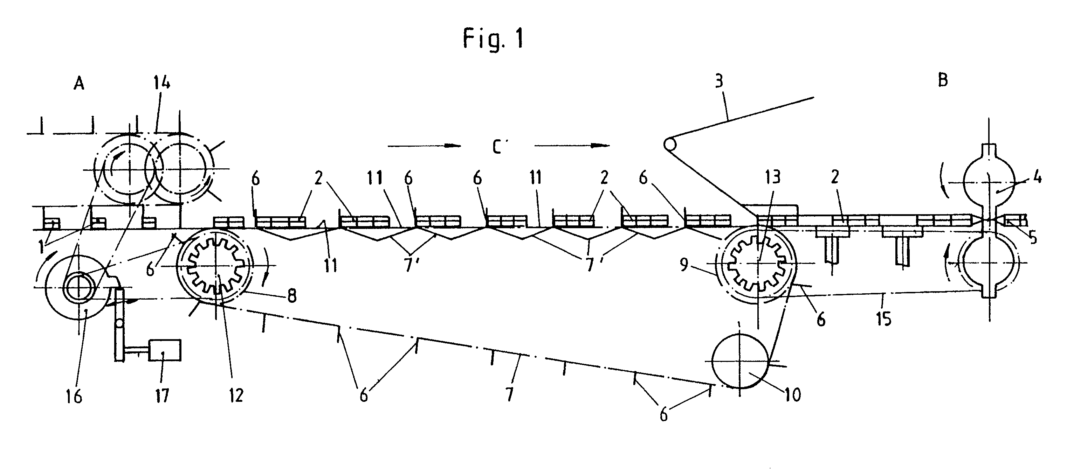

Gemäß Figur 1 ist eine erste Packmaschine A und eine zweite Packmaschine B hintereinandergeschaltet, wobei die Verbindung durch eine Förderstrecke C erreicht wird. Die Packmaschine A stellt Packgut 1 in Form von einzelnen Stücken her oder verpackt einzeln solche Packgutstücke, aus denen Gruppen 2 von Packgutstücken gebildet werden, die an in einer gemeinsamen Hülle vereint werden sollen. Hierzu dient die Packmaschine B, die insbesondere als Schlauchbeutelmaschine ausgebildet sein kann. Beispielsweise wird eine Gruppe 2 aus drei Einzelstücken Packgut 1 zusammengestellt und gemeinsam in eine Schlauchhülle aus Kunststoff eingebracht. Die in der Packmaschine B eingesetzte Schlauchhülle wird aus einer Kunststofffolie 3 gebildet, die in Form einer Materialbahn zuläuft und die dann zwischen den Gruppen 2 aus Packgut 1 vermittels Schweißeinrichtungen 4 verschlossen und gleichzeitig unterteilt wird, so daß letztendlich versandfähige Packungen 5 aus der Packmaschine B austreten.

Die den Auslauf der ersten Packmaschine A und den Einlauf der zweiten Packmaschine B verbindende Förderstrecke weist als wesentliches Element eine mit Mitnehmern 6 besetzte Förderkette 7 auf, die über Kettenräder 8 und 9 am Anfang und Ende der Förderstrecke C sowie über ein Leitrad 10 läuft. Diese Förderkette 7 ist länger, als es dem eigentlichen Förderweg entspricht und stützt sich mit ihren Mitnehmern 6 im Förderbereich auf einer festen Führungsbahn 11 ab. Die Förderkette 7 ist so lang bemessen, daß sie zwischen den Mitnehmern 6 im Bereich der Förderbahn 11 Durchhänge 7' bilden kann. Die Durchhänge 7' können je nach der Länge des Stücks der Förderkette 7, die zwischen die Kettenräder 8 und 9 zu liegen kommt, unterschiedliche Größe aufweisen, wobei der durch die Förderstrecke C gebildete Speicher somit mehr oder weniger gefüllt ist.

Die längenveränderliche Förderkette 7 wird über das Kettenrad 8 von der Packmaschine A aus und über das Kettenrad 9 von der Packmaschine B aus angetrieben, wobei ggf. Drehzahlunterschiede durch Erhöhung oder Verminderung der Anzahl der Stücke Packgut 1 bzw. Gruppen 2 im Speicher ausgeglichen werden. Mit dem Kettenrad 8 ist ein Drehimpulsgeber 12 verbunden. Ebenso weist das Kettenrad 9 einen Drehimpulsgeber 13 auf. Diese Drehimpulsgeber 12 und 13 geben jeweils Impulse ab, die der bzw. den Strecken entsprechen, um die die Kettenräder 8 bzw. 9 tatsächlich weiterbewegt worden sind.

Die Beschickung der Förderkette 7 mit Stücken von Packgut 1 erfolgt über einen ebenfalls mit Mitnehmern versehenen Auslaufförderer 14, der die Stücke einzeln auf die Führungsbahn 11 überführt, wo sie dann durch die Mitnehmer 6 der Förderkette 7 erfaßt und mitgenommen werden.

Am Ende der Förderstrecke C und damit am Anfang der Packmaschine B ist ein Einlaufförderer 15 vorgesehen, der als Kette , Band o. dgl. ausgebildet sein kann. Dieser Einlaufförderer 15 erfaßt Gruppen 2 von Packgut und führt diese in die Packmaschine B ein.

Im Bereich des Kettenrads 8 bzw. des Drehimpulsgebers 12 der Packmaschine A ist eine Eintourenkupplung 16 vorgesehen, über die der Antrieb des Kettenrads 8 und damit des Drehimpulsgebers 12 erfolgt. In diesem von der Packmaschine A zu dem Kettenrad führenden Antriebsstrang ist diese Eintourenkupplung 16 eingeschaltet, die in der eingerückten Stellung den Antrieb überträgt. Es ist ein Magnet 17 vorgesehen, über den die Eintourenkupplung 16 im Sinne eines Ausrückens und Unterbrechens des Antriebs des Kettenrads betätigt werden kann.

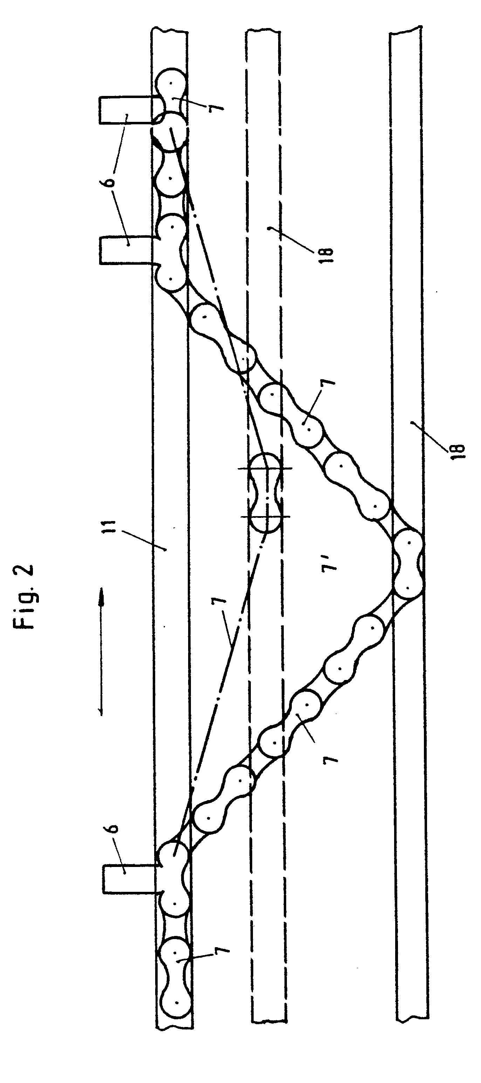

Unterhalb der Führungsbahn 11 ist zur Abstützung und Führung der Durchhänge 7' der Förderkette 7 noch eine Führungsbahn 18 (Figur 2) vorgesehen, die quer zur Führungsbahn 11 verschiebbar ist, so daß sie sich beispielsweise beim Verschieben der Führungsbahn 18 in die in Figur 2 gestrichelt eingezeichnete Stellung die Durchhänge 7' verkürzen und sich der gegenseitige Abstand der Mitnehmer 6 voneinander vergrößert, wobei es gleichbedeutend ist mit einer Verringerung der Anzahl der Gruppen 2 aus Packgut in dem den Speicher bildenden Teil der Förderkette 7. Umgekehrt kann der den Speicher bildende Teil der Förderkette 7 eine größere Anzahl von Gruppen 2 dann aufnehmen, wenn die Durchhänge 7' vergrößert werden und sich also die Anzahl der Gruppen 2 im Speicher vergrößert.

Die die beiden Packmaschinen A und B verbindende Fördervorrichtung arbeitet wie folgt: Von der Packmaschine A gelangen einzelne Stücke von Packgut 1 auf die Führungsbahn 11. Durch entsprechende Abstimmung der Arbeitsgeschwindigkeiten des Auslaufförderers 14 und des Antriebs des Kettenrads 8 werden auf dieser Führungsbahn 11 aus den Einzelstücken des Packguts 1 Gruppen 2 von Packgut gebildet, beispielsweise so, daß jede Gruppe 2 aus drei Stücken Packgut 1 besteht. Diese Gruppen 2 werden durch die Mitnehmer 6 der Förderkette 7 mitgenommen und der Packmaschine B zugeführt. Bei den zu verpackenden Stücken kann es sich beispielsweise um Schokoladetafeln, - riegel, Napolitaines, Pralinen, Kekse oder ähnliche Süßwaren handeln, die dann als versandfertige Packungen 5, jeweils drei Stücke Packgut 1 enthaltend, aus der Packmaschine B auslaufen.

Sollte aus irgendeinem Grund, sei es aufgrund einer Nicht-Besetzung oder einer Aussonderung eines defekten Stücks Packgut 1 an dem betreffenden Mitnehmer des Auslaufförderers 14 ein Stück des Packguts 1 fehlen, so wie es in Figur 1 beispielhaft dargestellt ist, so steht ein ordnungsgemäßes Stück Packgut 1 an dieser Stelle auch nicht zur Übergabe an die Förderstrecke 11 und damit die Förderkette 7 zur Verfügung. Über den Magnet 17 wird die Eintourenkupplung 16 ausgerückt, so daß das Kettenrad 8 genau für eine Teilung des Auslaufförderers 14 stillgesetzt, also nicht weiterbewegt wird. Nachdem die Eintourenkupplung 16 wieder eingeschaltet ist, gelangt das nächstfolgende, ordnungsgemäß hergestellte und/oder verpackte Stück Packgut 1 an der Übergabestelle anstelle des ausgesonderten Stücks auf die Führungsbahn 11, wo, wie dargestellt, wieder eine Gruppe 2 von Stücken Packgut 1 dann vervollständigt ist und durch den Mitnehmer 6 der Förderkette mitgenommen wird. Während dieser Maßnahmen läuft die Förderkette 7 im Bereich der Förderstrecke C kontinuierlich weiter, d. h. eine solche Störung im Bereich der Packmaschine A hat zunächst keinen Einfluß auf die Arbeitsgeschwindigkeit der Packmaschine B. Durch die Durchhänge 7' der Förderkette 7 erfolgt ein Längenausgleich, so daß trotz irgendwelcher Fehlleistungen der Packmaschine A oder bei der Beschickung der Förderkette 7 die Gruppen 2 von Stücken Packgut 1 auf der Förderstrecke C immer ordnungsgemäß gebildet und kontinuierlich in die Packmaschine B einlaufen können. Dabei wird in einem solchen Fall die Förderkette 7 gestreckt, indem sich die Durchhänge 7' entsprechend verkleinern. Andererseits ist in einem solchen Störungsfall nicht nur das Kettenrad, sondern gleichzeitig auch der Drehimpulsgeber 12 stillgesetzt worden, in-dem die Eintourenkupplung 16 über den Magnet 17 ausgerückt wurde. Andererseits gibt aber der Dreh-impulsgeber 13 bei insoweit unveränderter Arbeitsgeschwindigkeit der Packmaschine B unverändert Impulse ab, so daß durch einen Vergleich der von dem Drehimpulsgeber 12 und der von dem Drehimpulsgeber 13 abgegebene Impulse leicht festgestellt werden kann, ob sich die Anzahl der im Speicher befindlichen Gruppen 2 oder Stücken von Packgut 1 verändert hat. Im vorliegenden Fall hat sich diese Anzahl um ein Stück verkleinert. Durch eine nicht weiter dargestellte, als elektronische Steuereinrichtung ausgebildete Synchronisationseinrichtung wird der kurzzeitige Stillstand des Kettenrads 8 in eine entsprechende kontinuierliche Verminderung der Arbeitsgeschwindigkeit der Packmaschine B und damit des Kettenrads 9 umgesetzt, damit die unterschiedlichen Anzahlen von Impulsen zwischen den beiden Drehimpulsgebern 12 und 13 ausgeglichen werden. Eine geringfügige Minderung der Arbeitsgeschwindigkeit der Packmaschine B führt also dazu, daß letztendlich die den Speicher bildende Förderstrecke C wiederum die vorgesehene Anzahl von Gruppen 2 oder Stücken von Packgut 1 aufweist, so daß beide Packmaschinen A und B dann wieder mit durchaus unterschiedlicher, aber jeweils konstanter Arbeitsgeschwindigkeit kontinuierlich weiterarbeiten können.

Sollten am Auslaufförderer 14 mehrere Stücke von Packgut 1 hintereinander ausfallen, und zwar eine größere Anzahl, als es die mögliche Dehnung der Förderkette 7 in der Förderstrecke C zuläßt, so bleibt das Kettenrad 8 stehen, während die Förderkette 7 durch das weiterhin angetriebene Kettenrad 9 in dessen Bereich kontinuierlich weiterläuft. Gleiches gilt dann, wenn der Antrieb der Packmaschine A stehenbleibt, also beispielsweise durch Ausschalten zu Beginn einer Frühstückspause. Durch die Synchronisiereinrichtung steht während des Dehnens der Förderkette 7 auf das zulässige Maß in der Förderstrecke C eine ausreichende Zeit zur Verfügung, in der die Arbeitsgeschwindigkeit der Packmaschine B bis zum Stillstand heruntergeregelt werden kann. Setzt die Zufuhr der Stücke von Packgut 1 an dem Auslaufförderer 14 der Packmaschine A wieder ein, so wird der Antrieb des Kettenrads 8 und damit des Drehimpulsgebers 12 über die Eintourenkupplung 16 wieder eingeschaltet und der Antrieb des Kettenrads 9 und des Drehimpulsgebers 13 wird entsprechend der Impulsdifferenz beschleunigt. Wird die Packmaschine A in ihrer Geschwindigkeit geregelt, so paßt sich die Packmaschine B in ihrer Arbeitsgeschwindigkeit vermittels der Synchronisationseinrichtung an.

**Patentansprüche**

1. Fördervorrichtung zum Verbinden einer ersten und einer von dieser mit Packgut belieferten zweiten Packmaschine, wobei der Antrieb der ersten Packmaschine (A) einen ihr zugeordneten Auslaufförderer und der Antrieb der zweiten Packmaschine (B) einen dieser zugeordneten Einlaufförderer jeweils synchron steuern, mit einer den Auslaufförderer und den Einlaufförderer verbindenden, einen Speicher darstellenden Förderstrecke (C) mit angetriebenen Mitnehmern (6) zum Fördern des Packguts (2), wobei der gegenseitige Abstand der Mitnehmer (6) im Bereich der Förderstrecke (C) veränderlich ist, und einer elektronische Steuereinrichtung zur Abstimmung der Arbeitsgeschwindigkeit der zweiten Packmaschine (B) abhängig von der ersten Packmaschine (A), dadurch gekennzeichnet, daß die Mitnehmer (6) im Bereich der Förderstrecke (C) auf einer Förderkette (7) angeordnet sind, die als Kettenspeicher ausgebildet und über ein am Anfang der Förderstrecke (C) angeordnetes Kettenrad (8) von der ersten Packmaschine (A) und über ein am Ende der Förderstrecke (C) angeordnetes Kettenrad (9) von der zweiten Packmaschine (B) angetrieben ist, daß die Kettenräder (8, 9) je mit einem Drehimpulsgeber (12, 13) versehen sind und daß bei einer Geschwindigkeitsregulierung des Antriebs des einen Kettenrads (8) die Arbeitsgeschwindigkeit der zweiten Packmaschine (B) und damit des anderen Kettenrads (9) durch die als Synchronisationseinrichtung ausgebildete elektronische Steuereinrichtung veränderbar ist.

2. Fördervorrichtung nach Anspruch 1, dadurch gekennzeichnet, daß zur Geschwindigkeitsregulierung des Antriebs des einen Kettenrads (8) in dem Antriebsstrang zu diesem Kettenrad (8) eine Eintourenkupplung (16) angeordnet ist.

3. Fördervorrichtung nach Anspruch 1 oder 2, dadurch gekennzeichnet, daß eine die ordnungsgemäße Beschickung der Förderkette (7) mit Packgut (1) überwachende Kontrolleinrichtung vorgesehen ist, die den Antrieb des Kettenrads (8) steuert.

4. Förderrichtung nach Anspruch 1, dadurch gekennzeichnet, daß die als Kettenspeicher ausgebildete Förderkette (7) zwischen den Mitnehmern Durchhänge (7') bilden kann und durch eine verschiebbare Führungsbahn (18) geführt ist.

## Claims

1. Conveying device for the connection of a first packing machine with a second packing machine supplied by the first with stock to be packed, wherein the drive of the first packing machine (A) synchronously controls an outlet conveyor associated with it and the drive of the second packing machine (B) synchronously controls an inlet conveyor associated with this, with a conveying section (C), which connects the outlet conveyor and the inlet conveyor and which represents a store, with driven entraining members (6) for conveying the stock (2) to be packed, wherein the mutual spacing of the entraining members (6) in the region of the conveying section (C) is variable, and with an electronicl control equipment for adapting the operating speed of the second packing machine (B) in dependence on the first packing machine (A), characterised thereby, that the entraining members (6) in the region of the conveying section (C) are arranged on a conveying chain (7), which is constructed as chain store and driven by the first packing machine (A) by way of a sprocket wheel (8) arranged at the beginning of the conveying section (C) and by the second packing machine (B) by way of a sprocket wheel (9) arranged at the end of the conveying section (C), that the sprocket wheels (8, 9) are each provided with a respective rotary pulse transmitter (12, 13) and that for a speed regulation of the drive of the one sprocket wheel (8), the operating speed of the second packing machine (B) and thereby of the other sprocket wheel (9) is variable by the electronic control equipment constructed as synchronising equipment.

2. Conveying device according to claim 1, characterised thereby, that for the speed regulation of the drive of the one sprocket wheel (8) a single-revolution clutch (16) is arranged in the drive train to this sprocket wheel (8).

3. Conveying device according to claim 1 or 2, characterised thereby, that a checking equipment is provided, which monitors the orderly charging of the conveying chain (7) with stock (1) to be packed and which controls the drive of the sprocket wheel (8).

4. Conveying device according to claim 1, characterised thereby, that the conveying chain (7) constructed as chain store can form sagging portions (7') between the entraining members and is guided by a displaceable guide track (18).

## Revendications

1. Dispositif transporteur pour relier une première machine emballeuse à une deuxième machine emballeuse alimentée en articles emballés par cette première machine, dans lequel l'entraînement de la première emballeuse (A) et l'entraînement de la deuxième emballeuse (B) commandent respectivement, toujours en synchronisme, l'entraînement d'un transporteur d'évacuation associé à la première emballeuse et celui d'un transporteur d'alimentation associé à la deuxième emballeuse, avec une ligne transporteuse (C) reliant le transporteur d'évacuation au transporteur d'alimentation, cette ligne constituant un magasin, avec des tocs d'entraînement (6) entraînés pour le transport des emballages (2), l'écartement entre les tocs (6) dans la région de la ligne transporteuse (C) étant variable, et avec un dispositif de commande électronique pour synchroniser la vitesse de travail de la deuxième emballeuse (B) en fonction de la première emballeuse (A), caractérisé en ce que les tocs entraîneurs (6) sont disposés dans la région de la ligne transporteuse (C) sur une chaîne transporteuse (7) qui est agencée comme magasin sur chaîne et qui est entraînée par un pignon de chaîne (8) de la première emballeuse (A) disposé au commencement de la ligne transporteuse (C) et par un pignon de chaîne (9) de la deuxième emballeuse (B) disposé à l'extrémité de la ligne transporteuse (C), en ce que les pignons de chaîne (8, 9) sont munis chacun d'un émetteur d'impulsions rotatif (12, 13), et en ce que, dans le cas d'une régulation de la vitesse d'entraînement du pignon de chaîne (8), la vitesse de travail de la deuxième emballeuse (B) et par suite, la vitesse de l'autre pignon de chaîne (9) peut être modifiée par le dispositif de commande électronique agencé sous la forme d'un dispositif de synchronisation.

2. Dispositif transporteur selon la revendication 1, caractérisé en ce qu'un embrayage (16) à un seul tour est disposé dans la ligne d'entraînement du pignon de chaîne (8) pour la régulation de vitesse de l'entraînement de ce pignon de chaîne (8).

3. Dispositif transporteur selon la revendication 1 ou 2, caractérisé en ce qu'il est prévu un dispositif de contrôle surveillant l'alimentation régulière de la chaîne transporteuse (7) en articles emballés (1), lequel dispositif de contrôle commande l'entraînement du pignon de chaîne (8).

4. Dispositif transporteur selon la revendication 1, caractérisé en ce que la chaîne transporteuse (7) aménagée comme magasin sur chaîne peut former des flèches (7') entre les tocs d'entraînement et est guidée par une glissière de guidage mobile (18).

## Fig. 1

EP 0 178 324 B1

# Fig. 2

EP 0 178 324 B1